# EUROPEAN PATENT APPLICATION

(11) **EP 1 617 241 A1**
(43) Date of publication of application: **18.01.2006**
(21) Application number: 05015144.8
(22) Date of filing: 12.07.2005
(51) Int. Cl.: G02B 5/08, C03C 3/093

(54) **Reflecting mirror**

(30) Priority: 14.07.2004 JP 2004207638
(71) Applicant: Osaka Special Glass Co., Ltd., Kita-ku Osaka (JP)
(72) Inventor: Imanishi, Osamu, Katano-shi Osaka (JP)
(74) Representative: Grünecker, Kinkeldey, Stockmair & Schwanhäusser Anwaltssozietät

(57) **Abstract**

A reflecting mirror includes an uncrystallized glass substrate and thin multilayer reflective coatings formed on a surface of the glass substrate by vapor deposition. The glass substrate contains 53 to 64 percent by weight of SiO₂, 10 to 23 percent by weight of Al₂O₃, ZnO and MgO each in an amount of not less than 3 percent by weight and in a total amount of 8 to 20 percent by weight, Na₂O and K₂O in a total amount of 0.2 to 2 percent by weight, 1 to 8 percent by weight of B₂O₃, 0 to 4% by weight of TiO₂, and As₂O₃ and Sb₂O₃ in a total amount of not more than 2 percent by weight. The glass substrate has an average expansion coefficient of not more than 35, and a distortion point of not less than 640 degrees C. Thus, the reflecting mirror can withstand a temperature of 615 degrees C on its inner surface even though the substrate contains only a small amount of TiO₂.

## Description

The present invention relates to a reflecting mirror of a light source lamp for use in a projector or a rear projection TV.

Conventional such reflecting mirrors comprise a glass substrate, and thin multilayer reflective coatings that transmit infrared and ultraviolet radiation and are formed on the glass substrate by vapor deposition.

The higher the luminance of the light source lamp, the higher the heat buildup. Thus, high heat resistance is required for the glass substrate of the reflecting mirror used in such a light source lamp. Specifically, the glass substrate has to be sufficiently heat-resistant so that no cracks and no peeling of the reflective coatings will occur when the glass substrate is subjected to a heat resistance test comprising 8 cycles of heating to 550 degrees C and cooling naturally to normal temperature.

Also, since the lamp of a projector or a rear projection TV is an ultrahigh pressure mercury lamp, high mechanical strength is required in case of explosion.

Specifically, the reflecting mirror has to have mechanical strength high enough not to crack when the lamp is intentionally burst by supplying excessive current while the lamp is on.

JP patent publication 7-92527 discloses crystallized glass to be used for a glass substrate of such a reflecting mirror that satisfies both the abovementioned requirements for heat resistance and mechanical strength. JP patent publications 3527223 and 2001-305320 disclose special glass which has been developed for use as a glass substrate for such a reflecting mirror and which also satisfies both of the abovementioned requirements.

But crystallized glass needs heat treatment in two stages for crystallization. Thus, its production cost tends to be high.

Moreover, it is necessary to polish its surface before depositing reflective coatings, which also pushes up the production cost.

Besides its high production cost, crystallized glass has the following problem concerning illuminance after the lamp has been fixed.

That is, since crystallized glass has to be crystallized by subjecting molded glass to heat treatment, the glass tends to shrink slightly during heat treatment. This causes diffuse reflection of the light from the lamp.

The glass disclosed in JP patent publication 3527223 has a sufficiently high distortion point of 650 degrees C, but its average expansion coefficient is relatively high, i.e. not more than 38. Further, this publication recommends use of a large amount (i.e. not more than 15%) of TiO₂, which is relatively expensive compared to other components, in order to lower the average expansion coefficient. In examples of this publication, too, TiO₂ is used by 5 to 6 %. The glass disclosed in JP patent publication 2001-305320 has a relatively high average expansion coefficient of 30 to 36, and its distortion point is not less than 620 degrees C, which is insufficient in view of the fact that today's light source lamps are high in luminance and thus tend to be heated to higher temperature.

An object of the present invention is to provide a reflecting mirror including a glass substrate containing no or only a small amount of expensive TiO₂, and still having a sufficiently low average expansion coefficient of not more than 35 and a sufficiently high distortion point of not less than 640 degrees C so that it can withstand a temperature of 615 degrees C on its inner surface.

According to the present invention, there is provided a reflecting mirror comprising an uncrystallized glass substrate containing 53 to 64 percent by weight of SiO₂, 10 to 23 percent by weight of Al₂O₃, ZnO and MgO each in an amount of not less than 3 percent by weight and in a total amount of 8 to 20 percent by weight, Na₂O and K₂O in a total amount of 0.2 to 2 percent by weight, 1 to 8 percent by weight of B₂O₃, 0 to 4% by weight of TiO₂, and As₂O₃ and Sb₂O₃ in a total amount of not more than 2 percent by weight, and thin multilayer reflective coatings formed on a surface of the glass substrate by vapor deposition.

The glass substrate having this composition has an average expansion coefficient of 30 to 35, a distortion point of not less than 640 degrees C, and a Young's modulus of not less than 77 GPa. The reflecting mirror comprising this glass substrate and thin multilayer reflective coatings formed on a surface of the glass substrate has a high transmittance of infrared and ultraviolet radiation and has a heat resistance of not less than 615 degrees C.

That is, the reflecting mirror does not crack and its thin multilayer reflective coatings do not peel after a heat resistance test comprising 8 cycles of heating to 615 degrees C and cooling naturally to normal temperature.

The content of SiO₂ in the glass substrate is determined to be in the range of 53 to 64 percent by weight, because if over 64 percent by weight, it is difficult to melt the glass, and if less than 53 percent by weight, devitrification tends to occur during molding. The content of Al₂O₃ is determined in the range of 10 to 23 percent by weight because if less than 10 percent by weight, the mechanical strength is insufficient, and if over 23 percent by weight, it is difficult to melt the glass.

ZnO and MgO are contained each in an amount of not less than 3 percent by weight and in a total amount of 8 to 20 percent by weight. These components are relatively low in expansion coefficient and high in distortion point, and still serve to stabilize glass. Thus, by adding these components, it is possible to reduce the amounts of Na₂O and K₂O, which also serve to stabilize glass, but simultaneously tend to increase the expansion coefficient while lowering the distortion point, and also tend to lower the mechanical strength. Also, since ZnO and MgO are relatively high in mechanical strength, by adding these components, it is possible to reduce the amount of expensive TiO₂. CaO, BaO and SrO, as disclosed in JP patent 2001-305320, serve to stabilize glass. But they are preferably not added in too large amounts if higher heat resistance is required because they tend to increase thermal expansion and lower the distortion point.

B₂O₃ serves to improve meltability of glass, thereby improving workability. It should be added by not less than 1 percent by weight. But if it is added by more than 8 percent by weight, devitrification tends to occur. Na₂O and K₂O also serve to improve meltability of glass, thereby improving workability. They should be added by not less than 0.2 percent by weight in total. But addition of these components by more than 2 percent by weight in total will increase the expansion coefficient and lower the distortion point.

TiO₂ serves to lower the expansion coefficient and increase the mechanical strength. But TiO₂ is not an essential component in the present invention. Since TiO₂ is an expensive substance, if it is added, it should be added by not more 4 percent by weight. ZrO₂, as disclosed in JP patent publication 2001-305320, increases the expansion coefficient and lowers the distortion point more remarkably than TiO₂. Thus, it should not be added in too large an amount if higher heat resistance is required.

As₂O₃ and Sb₂O₃ serve as clarificants in melting glass. A total amount of not less than 2 percent by weight of these substances will serve sufficiently as clarificants.

The glass substrate of the reflecting mirror according to the present invention has an average expansion coefficient of not more than 35 and a distortion point of not less than 640 degrees C even though it contains not a large amount of expensive Ti02. Thus, if used in a projector or a rear projection TV, the reflecting mirror according to this invention will withstand a high temperature of 615 degrees C on its inner surface, as well as heat shock when the lamp is turned on and off. The reflecting mirror also shows high mold accuracy after pressing.

Examples of the invention are now described.

Raw materials shown in Table 1 were mixed together to prepare glass compositions. The respective glass compositions were melted at a temperature of 1500 to 1600 degrees C. The thus obtained glass substrates were formed into the shape of a reflecting mirror, and multilayer coatings comprising alternating Ta₂O₆ and TiO₂-SiO₂ coatings were formed on the glass substrates by vapor deposition to form reflecting mirrors (Examples 1 to 7).

**Table 1**

| | Example 1 | Example 2 | Example 3 | Example 4 | Example 5 | Example 6 | Example 7 |
|---|---|---|---|---|---|---|---|
| SiO₂ | 59.7 | 61.7 | 60.7 | 60.7 | 57.7 | 59.7 | 59.7 |
| Al₂O₃ | 15 | 15 | 18 | 15 | 14 | 15 | 15 |
| ZnO | 10 | 8 | 5 | 12 | 14 | 10 | 10 |
| MgO | 6 | 8 | 9 | 7 | 8 | 6 | 6 |
| B₂O₃ | 4 | 3 | 3 | 4 | 3 | 4 | 4 |
| Na₂O+K₂O | 1 | 1 | 1 | 1 | 1 | 1 | 1 |
| TiO₂ | 4 | 3 | 3 | | 2 | 4 | 4 |
| As₂O₃+Sb₂O₃ | 0.3 | 0.3 | 0.3 | 0.3 | 0.3 | 0.3 | 0.3 |
| Total | 100 | 100 | 100 | 100 | 100 | 100 | 100 |
| Distortion point | 642 | 660 | 681 | 640 | 630 | 642 | 642 |
| Expansion | 33 | 31 | 34 | 32 | 35 | 33 | 33 |
| Young's modulus | 88 | 84 | 84 | 77 | 83 | 83 | 83 |

The reflecting mirrors thus obtained (Examples 1 to 7) were subjected to a heat resistance test comprising 8 cycles of heating to 615 degrees C and cooling naturally to normal temperature. After the test, none of the reflecting mirrors developed cracks and none of the thin multilayer reflective coatings of the respective reflecting mirrors peeled.

## Claims

1. A reflecting mirror comprising an uncrystallized glass substrate containing 53 to 64 percent by weight of SiO₂, 10 to 23 percent by weight of Al₂O₃, ZnO and MgO each in an amount of not less than 3 percent by weight and in a total amount of 8 to 20 percent by weight, Na₂O and K₂O in a total amount of 0.2 to 2 percent by weight, 1 to 8 percent by weight of B₂O₃, 0 to 4% by weight of TiO₂, and As₂O₃ and Sb₂O₃ in a total amount of not more than 2 percent by weight, and thin multilayer reflective coatings formed on a surface of said glass substrate by vapor deposition.

2. The reflecting mirror of claim 1 wherein said glass substrate has an average expansion coefficient of 30 to 35, a distortion point of not less than 640 degrees C, and a Young's modulus of not less than 77 GPa, said reflecting mirror being used in a projector or a rear projection TV.
